# EUROPEAN PATENT APPLICATION

(11) **EP 4 773 416 A1**
(43) Date of publication of application: **08.07.2026**
(21) Application number: 23953653.5
(22) Date of filing: 28.09.2023
(51) Int. Cl.: H01M 50/552, H01M 50/172, H01M 10/0525

(54) **BATTERY CELL, BATTERY, AND ELECTRICAL DEVICE**

(71) Applicant: Contemporary Amperex Technology Co., Limited, Ningde, Fujian 352100 (CN)
(72) Inventor: SU, Huasheng, Ningde, Fujian 352100 (CN); CAI, Runchen, Ningde, Fujian 352100 (CN); YANG, Rui, Ningde, Fujian 352100 (CN); ZHENG, Yulian, Ningde, Fujian 352100 (CN); WANG, Peng, Ningde, Fujian 352100 (CN); JIN, Haizu, Ningde, Fujian 352100 (CN)
(74) Representative: Ziebig Hengelhaupt Intellectual Property Attorneys Patentanwaltskanzlei PartGmbB
(86) International application number: PCT/CN2023/122555
(87) International publication number: WO 2025/065504

(57) **Abstract**

The present application discloses a battery cell (12), a battery (100), and an electric device, pertaining to the field of battery technology. The battery cell (12) includes a housing (121), an electrode terminal (123), and a fixing member (125). The housing (121) includes a first wall (128), and the first wall (128) is provided with a first through hole (1281). The electrode terminal (123) includes a main body (1231) and a step portion (1232), where at least a portion of the main body (1231) passes through the first through hole (1281), the step portion (1232) and the main body (1231) are integrally formed, the step portion (1232) protrudes from a peripheral surface of the main body (1231), and the step portion (1232) is located on an outer side of the first wall (128). The fixing member (125) is made of a metal material. The fixing member (125) is provided with a second through hole (1251) for the main body (1231) to pass through. In a thickness direction of the first wall (128), at least a portion of the fixing member (125) is located between the first wall (128) and the step portion (1232) and abuts against the step portion (1232). In the thickness direction of the first wall (128), the main body (1231) has a first end surface facing away from an interior of the housing (121), the fixing member (125) has a second end surface facing away from the first wall (128), and the first end surface extends beyond the second end surface. The energy density of the battery (100) is increased.

## Description

### TECHNICAL FIELD

The present application relates to the field of battery technology, and in particular, to a battery cell, a battery, and an electric device.

### BACKGROUND

Batteries are widely used in electronic devices, such as electric bicycles, electric vehicles, electric aircraft, and electric ships.

How to increase the energy density of batteries is an urgent problem that needs to be solved in the battery technology.

### SUMMARY

In view of the above problems, the present application provides a battery cell, a battery, and an electric device, which can increase the energy density of the battery.

According to a first aspect, the present application provides a battery cell including a housing, an electrode terminal, and a fixing member, where the housing includes a first wall, and the first wall is provided with a first through hole; the electrode terminal includes a main body and a step portion, at least a portion of the main body passing through the first through hole, the step portion and the main body are integrally formed, the step portion protrudes from a peripheral surface of the main body, and the step portion is located on an outer side of the first wall; and the fixing member is made of a metal material, the fixing member is provided with a second through hole for the main body to pass through, and in a thickness direction of the first wall, at least a portion of the fixing member is located between the first wall and the step portion and abuts against the step portion; where in the thickness direction of the first wall, the main body has a first end surface facing away from an interior of the housing, the fixing member has a second end surface facing away from the first wall, and the first end surface extends beyond the second end surface.

In the technical solutions of the embodiments of the present application, the housing includes the first wall, and the first wall is provided with the first through hole; the electrode terminal includes the main body and the step portion, at least a portion of the main body passes through the first through hole, the step portion and the main body are integrally formed, the step portion protrudes from the peripheral surface of the main body, and the step portion is located on the outer side of the first wall; the fixing member is provided with the second through hole for the main body to pass through, and in the thickness direction of the first wall, at least a portion of the fixing member is located between the first wall and the step portion and abuts against the step portion. In the thickness direction of the first wall, the main body has the first end surface facing away from the interior of the housing, the fixing member has the second end surface facing away from the first wall, and the first end surface extends beyond the second end surface. With such a design, in the thickness direction of the first wall, a surface of the battery cell with a maximum height extending beyond an outer surface of the first wall is the first end surface, and when electrode terminals of the same specification are used, the height of the battery cell extending beyond the first wall can be correspondingly reduced, increasing a proportion of a space inside the housing of the battery cell to a total space of a battery, thereby increasing the energy density of the battery.

In some embodiments, the yield strength of the fixing member is greater than the yield strength of the electrode terminal. With such a design, when a stable connection is formed between the step portion and the fixing member, the thickness of the fixing member can be relatively small, thereby allowing the height of the electrode terminal extending beyond the outer surface of the first wall to be further reduced, and further increasing the energy density of the battery.

In some embodiments, the yield strength of the fixing member is σs1, and the yield strength of the electrode terminal is σs2, satisfying: 1.1 ≤ σs1/σs2 ≤ 10. By designing the ratio of the yield strength of the fixing member to the yield strength of the electrode terminal within a reasonable range, the deformation caused by the assembly force when the electrode terminal and the fixing member are connected can be controlled within a controllable range, reducing the assembly difficulty, reducing the risk of damage to the electrode terminal, and improving the stability of the connection between the two.

In some embodiments, 3 ≤ σs1/σs2 ≤ 5. By designing the ratio of the yield strength of the fixing member to the yield strength of the electrode terminal within a reasonable range, the deformation caused by the assembly force when the electrode terminal and the fixing member are connected can be controlled within a controllable range, further reducing the assembly difficulty, significantly reducing the risk of damage to the electrode terminal, and further improving the stability of the connection between the two.

In some embodiments, 205 Mpa ≤ σs1 ≤ 250 Mpa, and 40 Mpa ≤ σs2 ≤ 55 Mpa. By designing the yield strength of the fixing member and the yield strength of the electrode terminal within a reasonable range, the plasticity and brittleness of the fixing member and the electrode terminal can be controlled within a controllable range, reducing the risk of damage to the fixing member and the electrode terminal during assembly.

In some embodiments, in the thickness direction of the first wall, a height difference between the first end surface and the second end surface is D, and a thickness of the step portion is t, satisfying: 1.1 ≤ D/t ≤ 6. In the thickness direction of the first wall, by designing the ratio of the height difference between the first end surface and the second end surface to the thickness of the step portion within a reasonable range, the risk of connection failure between the step portion and the fixing member when the battery cell is subjected to an external force can be reduced, improving the stability of the connection between the step portion and the fixing member.

In some embodiments, 0.5 mm ≤ D ≤ 3 mm, and 0.5 mm ≤ t ≤ 2.5 mm. In the thickness direction of the first wall, by designing the height difference between the first end surface and the second end surface and the thickness of the step portion within a reasonable range, the energy density of the battery can be increased while ensuring good connection stability between the two as much as possible.

In some embodiments, in a radial direction of the main body, the fixing member extends beyond a peripheral surface of the step portion. With such a design, after the step portion abuts against the fixing member, the step portion does not come into contact with other components of the battery cell, and only the characteristics of the fixing member and the step portion need to be considered to control the connection stability between the electrode terminal and the fixing member, reducing the design difficulty.

In some embodiments, in the radial direction of the main body, a projection of the fixing member at least partially overlaps a projection of the step portion. With such a design, a height of the step portion extending beyond the outer surface of the first wall is further reduced, further increasing the energy density of the battery.

In some embodiments, at least a portion of the step portion is accommodated in the second through hole. The second through hole is used to accommodate a portion of the step portion, eliminating the need for additionally processing a space to accommodate the step portion, reducing the processing steps, reducing costs, and improving structural consistency of the fixing member.

In some embodiments, a diameter of the second through hole gradually decreases along a direction approaching the first wall, and the step portion abuts against a hole wall of the second through hole. When the step portion is connected to the fixing member, a larger fitting tolerance range is reserved, reducing the assembly difficulty.

In some embodiments, the step portion has a third end surface facing away from the first wall, and in the thickness direction of the first wall, the second end surface extends beyond the third end surface or is flush with the third end surface. Such a design means that in the thickness direction of the first wall, the step portion is completely accommodated inside the fixing member, further increasing the energy density of the battery.

In some embodiments, in the radial direction of the main body, a dimension by which the step portion protrudes from the peripheral surface of the main body is W₁, and 0.1 mm ≤ W₁ ≤ 5 mm. The dimension by which the step portion protrudes from the peripheral surface of the main body is designed within a reasonable range, helping to increase a contact area between the step portion and the fixing member, thereby helping to improve the connection strength between the step portion and the fixing member.

In some embodiments, an edge of the first end surface is provided with a first groove extending along a circumferential direction of the main body, the step portion has a fourth end surface facing away from the first wall, and the fourth end surface is coplanar with a bottom surface of the first groove. With such a design, the step portion can be formed by upsetting, and the electrode terminal and the fixing member can be connected by riveting, resulting in lower assembly costs and assembly difficulty.

In some embodiments, in the radial direction of the main body, a distance between a side surface of the first groove and the peripheral surface of the step portion is W₂, satisfying: 0.5 mm ≤ W₂ ≤ 10 mm. By designing the distance between the side surface of the first groove and the peripheral surface of the step portion within a reasonable range, the difficulty of forming the step portion by upsetting can be reduced, thereby reducing the assembly difficulty and direct costs of devices.

In some embodiments, a groove depth of the first groove is T, satisfying: 0.1 mm ≤ T ≤ 5 mm. By designing the groove depth of the first groove within a reasonable range, the difficulty of forming the step portion and the first groove by upsetting can be reduced, thereby reducing the assembly difficulty and direct costs of devices.

In some embodiments, a material of the fixing member includes steel, and a material of the electrode terminal includes aluminum or a copper-aluminum composite material. During production and manufacturing of the battery, the application processes of steel, aluminum, or the copper-aluminum composite material are relatively mature, which can reduce the design costs.

In some embodiments, the battery cell further includes a first insulating member, and at least a portion of the first insulating member is disposed between the fixing member and the first wall. On the one hand, the provision of the first insulating member can reduce the risk of short circuit between positive and negative electrode terminals in the battery. On the other hand, some components in the battery cell can be positioned, improving the assembly stability of the battery cell.

In some embodiments, the first insulating member includes a body portion and a first extension portion, the body portion is located between the fixing member and the first wall, the body portion is provided with a third through hole for the electrode terminal to pass through, and the first extension portion is located on a periphery of the fixing member and disposed around an edge of the body portion. With such a design, the fixing member can be pre-positioned and limited in the radial direction of the main body, reducing the assembly difficulty and improving the assembly stability of the fixing member. In addition, the fixing member and the first wall can be insulated and isolated, improving the current flow stability of the electrode terminal.

In some embodiments, an outer surface of the first wall is provided with a second groove, and the body portion is located in the second groove. With such a design, when the first insulating member is assembled with the first wall, pre-positioning can be performed through the second groove, facilitating the assembly of the first insulating member.

In some embodiments, in the thickness direction of the first wall, an end portion of the first extension portion extends out of the second groove. With such a design, the insulation between the fixing member and the first wall can be further improved.

In some embodiments, the first insulating member further includes a second extension portion, the second extension portion is disposed around the third through hole, one end of the second extension portion is connected to the body portion, and the other end of the second extension portion extends in a direction approaching the main body. With such a design, the insulation effect between the electrode terminal and the first wall is improved.

In some embodiments, the electrode terminal further includes a limiting portion, the limiting portion protrudes from the peripheral surface of the main body, the limiting portion is located on an inner side of the first wall, and the limiting portion is configured to limit movement of the electrode terminal toward an exterior of the housing. With such a design, the assembly of the electrode terminal and the housing can be completed by a single riveting, reducing the assembly difficulty.

In some embodiments, the battery cell further includes a sealing member, and at least a portion of the sealing member is located between the first wall and the limiting portion. With such a design, the airtightness inside the housing can be improved, improving the operational stability of the battery cell.

In some embodiments, the battery cell further includes an electrode assembly and an adapter, where the electrode assembly is disposed inside the housing, the adapter is connected to the electrode terminal and the electrode assembly, the electrode terminal is provided with a positioning portion, and the positioning portion is configured to position the adapter. With such a design, the adapter can be effectively positioned, allowing the adapter and the electrode terminal to be welded in a correct posture, reducing the risk of an internal open circuit in the battery cell caused by electrical connection failure between the adapter and the electrode terminal due to poor welding, and allowing the battery to have higher reliability.

In some embodiments, the adapter is provided with a positioning fitting portion, and the positioning fitting portion cooperates with the positioning portion. By providing the adapter with the positioning fitting portion that can cooperate with the positioning portion, the positioning accuracy between the adapter and the electrode terminal can be effectively improved, thereby effectively reducing the risk of electrical connection failure between the adapter and the electrode terminal due to poor welding, and allowing the battery to have higher reliability.

In some embodiments, one of the positioning portion and the positioning fitting portion includes a positioning groove, and the other includes a positioning protrusion. By defining one of the positioning portion and the positioning fitting portion to include the positioning groove and the other to include the positioning protrusion, the adapter and the electrode terminal are positioned and fitted with each other through a concave-convex structure, so that the positioning accuracy between the adapter and the electrode terminal can be effectively improved, thereby effectively reducing the risk of electrical connection failure between the adapter and the electrode terminal due to poor welding, and allowing the battery to have higher reliability.

In some embodiments, along the thickness direction of the first wall, the electrode terminal has a first surface facing the electrode assembly, and the first surface is formed with a third groove; and the adapter and the electrode terminal are welded to form a first weld mark, and along the thickness direction of the first wall, the first weld mark does not overlap the third groove. The first surface of the electrode terminal is formed with the third groove. To reduce the risk of overlap between a welding position and the third groove due to inaccurate positioning when assembling the electrode terminal and the adapter, at least a portion of the first weld mark falls into the third groove, resulting in the risk of electrical connection failure between the electrode terminal and the adapter due to poor welding between the electrode terminal and the adapter. In the above solution, by providing the positioning portion on the electrode terminal, the adapter can be effectively positioned, allowing the adapter and the electrode terminal to be welded in a correct posture, reducing the risk of electrical connection failure between the adapter and the electrode terminal due to poor welding, and allowing the battery to have higher reliability.

In some embodiments, the first weld mark is disposed around the third groove. By disposing the first weld mark around the third groove, a connection area between the adapter and the electrode terminal can be increased, improving the connection stability between the adapter and the electrode terminal, reducing the risk of electrical connection failure, and allowing the battery to have higher reliability.

In some embodiments, the housing includes a housing body and an end cover, where the housing body includes a bottom wall and a side wall disposed around the bottom wall, one end of the side wall is connected to the bottom wall, and the other end encloses an opening; and the end cover is configured to cover the opening; where the first wall is the end cover or the bottom wall. With such a design, the application scenarios of the battery cell are expanded.

According to a second aspect, the present application provides a battery including the battery cell according to the above embodiments.

In some embodiments, the battery further includes a busbar component, where the busbar component is welded to the electrode terminal to form a second weld mark, and a central axis of the first through hole passes through the second weld mark. With such a design, electrical connection can be formed by direct welding between the electrode terminal and the busbar component, improving the current flow stability of the battery cell.

According to a third aspect, the present application provides an electric device including the battery cell according to the above embodiments for providing electrical energy, or including the battery according to the above embodiments, where the battery is configured to provide electrical energy.

The foregoing description is merely an overview of the technical solutions of the present application. For a better understanding of the technical means in the present application such that they can be implemented according to the content of the specification, and to make the other objectives, features, and advantages of the present application more obvious and easier to understand, the following describes specific embodiments of the present application.

### BRIEF DESCRIPTION OF DRAWINGS

Various other advantages and benefits will become apparent to those of ordinary skill in the art by reading the detailed description of the preferred embodiments below. The drawings are only for the purpose of illustrating the preferred embodiments and are not to be considered as limiting the present application. Moreover, throughout the drawings, the same reference signs denote the same components. In the drawings:
FIG. 1 is a schematic structural diagram of a vehicle according to some embodiments of the present application;
FIG. 2 is an exploded view of a battery according to some embodiments of the present application;
FIG. 3 is an exploded view of a battery cell according to some embodiments of the present application;
FIG. 4 is an exploded view of a partial structure of a battery cell according to some embodiments of the present application;
FIG. 5 is a top view of a battery cell according to some embodiments of the present application;
FIG. 6 is a cross-sectional view of a local structure of the battery cell at A-A in FIG. 5 of the present application;
FIG. 7 is a locally enlarged view at B in FIG. 6;
FIG. 8 is a cross-sectional view of a partial structure of a battery cell according to some embodiments of the present application;
FIG. 9 is a partial schematic structural diagram of a battery cell according to some embodiments of the present application;
FIG. 10 is a partial schematic structural diagram of a battery cell according to some other embodiments of the present application;
FIG. 11 is a schematic diagram of a first wall, an electrode terminal, and an adapter according to some other embodiments of the present application; and
FIG. 12 is a schematic diagram of a first wall, an electrode terminal, and an adapter according to still some other embodiments of the present application.

The reference signs in the specific embodiments are as follows:
1000. vehicle; 200. controller; 300. motor; 100. battery; 11. box; 111. first portion; 112. second portion; 12. battery cell; 121. housing; 1211. end cover; 1212. housing body; 122. electrode assembly; 123. electrode terminal; 1231. main body; 12311. first end surface; 1232. step portion; 12321. third end surface; 1233. limiting portion; 12331. first surface; 12332. third groove; 1234. first groove; 124. adapting piece; 1240. terminal connection portion; 1241. tab connection portion; 1242. intermediate connection portion; 125. fixing member; 1251. second through hole; 1252. second end surface; 126. first insulating member; 1261. body portion; 12611. third through hole; 1262. first extension portion; 1263. second extension portion; 127. sealing member; 128. first wall; 1281. first through hole; 1282. second groove; 15. positioning portion; 150. positioning protrusion; 16. positioning fitting portion; 160. positioning groove; and 17. first weld mark.

### DESCRIPTION OF EMBODIMENTS

Embodiments of the technical solutions of the present application will be described in detail below with reference to the drawings. The following embodiments are only used to more clearly illustrate the technical solutions of the present application, and therefore are only examples and cannot be used to limit the protection scope of the present application.

Unless otherwise defined, all technical and scientific terms used herein have the same meaning as commonly understood by those skilled in the technical field to which the present application belongs; the terms used herein are only for the purpose of describing specific embodiments and are not intended to limit the present application; and the terms "comprise", "include", "have", and any variations thereof in the specification and claims of the present application and the above description of the drawings are intended to cover non-exclusive inclusion.

In the description of the embodiments of the present application, the technical terms "first", "second", and the like are only used to distinguish different objects and cannot be understood as indicating or implying relative importance or implicitly indicating the number, specific order, or primary-secondary relationship of the indicated technical features. In the description of the embodiments of the present application, "a plurality of" means two or more, unless otherwise explicitly and specifically defined.

Reference herein to "embodiment" means that a particular feature, structure, or characteristic described in connection with the embodiment may be included in at least one embodiment of the present application. The appearance of this phrase in various places in the specification does not necessarily refer to the same embodiment, nor is it an independent or alternative embodiment that is mutually exclusive with other embodiments. Those skilled in the art explicitly and implicitly understand that the embodiments described herein can be combined with other embodiments.

In the description of the embodiments of the present application, the term "a plurality of" refers to more than two (including two). Similarly, "a plurality of groups" refers to more than two groups (including two groups), and "a plurality of pieces" refers to more than two pieces (including two pieces).

In the description of the embodiments of the present application, the orientation or positional relationships indicated by the technical terms "center", "longitudinal", "transverse", "length", "width", "thickness", "upper", "lower", "front", "rear", "left", "right", "vertical", "horizontal", "top", "bottom", "inner", "outer", "clockwise", "counterclockwise", "axial", "radial", "circumferential", and the like are based on the orientation or positional relationships shown in the drawings, and are only for the convenience of describing the embodiments of the present application and simplifying the description, rather than indicating or implying that the referred apparatus or element must have a specific orientation, be constructed and operated in a specific orientation, and therefore cannot be understood as limiting the embodiments of the present application.

In the description of the embodiments of the present application, unless otherwise explicitly specified and defined, the technical terms "mounting", "connection", "join", and "fastening" should be understood in their general senses. For example, they may refer to a fixed connection, a detachable connection, or an integral connection, may refer to a mechanical connection or electrical connection, and may refer to a direct connection, an indirect connection via an intermediate medium, an internal communication between two elements, or an interaction between two elements. For those of ordinary skill in the art, the specific meanings of the above terms in the embodiments of the present application can be understood according to specific situations.

In the present application, a battery cell may include but is not limited to a lithium-ion secondary battery, a lithium-ion primary battery, a lithium-sulfur battery, a sodium-lithium-ion battery, a sodium-ion battery, a magnesium-ion battery, or the like. The shape of the battery cell may include but is not limited to a cylinder, a flat body, a cuboid, or other shapes. The battery cell may include but is not limited to a cylindrical battery cell, a prismatic battery cell, and a pouch battery cell according to the packaging method.

In some high-power applications such as electric vehicles, the application of batteries includes three levels: battery cells, battery modules, and batteries. A battery module is formed to protect battery cells from external impact, heat, vibration, and the like by electrically connecting a certain number of battery cells together and placing them in a frame. A battery refers to a final state of a battery system installed in an electric vehicle. The battery mentioned in the embodiments of the present application is a single physical module including one or more battery cells to provide higher voltage and capacity. A battery typically includes a box for encapsulating one or more battery cells. The box can reduce the risk of liquid or other foreign matter affecting the charging or discharging of the battery cells.

The following will mainly focus on cuboid battery cells. It should be understood that the embodiments described below are also applicable in some aspects to cylindrical battery cells or pouch battery cells.

In a typical battery cell structure, the battery cell includes a housing component, an electrode assembly, and an electrolyte. The housing component may be an end cover or a housing body, and the end cover seals an opening of the housing body to define an accommodation space for accommodating the electrode assembly.

The electrode assembly is accommodated in the accommodation space and includes a positive electrode plate, a negative electrode plate, and a separator. The battery cell mainly works by the movement of metal ions between the positive electrode plate and the negative electrode plate. The positive electrode plate includes a positive electrode current collector and a positive electrode active material layer. The positive electrode active material layer is applied on a surface of the positive electrode current collector. The positive electrode current collector not coated with the positive electrode active material layer protrudes from the positive electrode current collector coated with the positive electrode active material layer, and the positive electrode current collector not coated with the positive electrode active material layer serves as a positive electrode tab. Taking a lithium-ion battery as an example, a material of the positive electrode current collector may be aluminum, and a positive electrode active material may be lithium cobalt oxide, lithium iron phosphate, ternary lithium, lithium manganate, or the like. The negative electrode plate includes a negative electrode current collector and a negative electrode active material layer. The negative electrode active material layer is applied on a surface of the negative electrode current collector, the negative electrode current collector not coated with the negative electrode active material layer protrudes from the negative electrode current collector coated with the negative electrode active material layer, and the negative electrode current collector not coated with the negative electrode active material layer serves as a negative electrode tab. A material of the negative electrode current collector may be copper, and a negative electrode active material may be carbon, silicon, or the like. To allow a large current to pass through without any fusing, a plurality of positive electrode tabs are provided and stacked together, and a plurality of negative electrode tabs are provided and stacked together. In addition, the forming method of the electrode assembly may include but is not limited to winding or stacking.

Tabs are typically electrically connected to a conductive member to lead out the electrical energy of the electrode assembly. In some cases, the conductive member is an adapting piece connecting the tab and an electrode terminal. In some other cases, the conductive member is the electrode terminal.

The electrode terminal typically includes a positive electrode terminal and a negative electrode terminal. For a cuboid battery cell, an electrode terminal is typically disposed on an end cover portion. In some other cases, the electrode terminal may alternatively be disposed on a housing body portion. A plurality of battery cells are connected in series and/or parallel through electrode terminals for various applications.

The battery may also include a busbar component. The busbar component is configured to achieve electrical connection between a plurality of battery cells, such as parallel or series or series-parallel connection. The busbar component can achieve electrical connection between battery cells by connecting electrode terminals of the battery cells.

For the development of battery technology, multiple design factors, such as reliability, cycle life, discharge capacity, charge-discharge rate, and other performance parameters need to be considered simultaneously. In addition, the energy density of the battery also needs to be considered.

In some cases, the electrode terminal of the battery cell is riveted to a wall portion of the housing by a riveting block wrapping an end portion of the electrode terminal. In a direction of the wall portion of the housing, a surface of the riveting block facing away from the wall portion of the housing extends beyond an outer end surface of the electrode terminal. This design is to provide additional protection and support for the electrode terminal to reduce the risk of the electrode terminal loosening. In addition, the electrical energy of the battery cell can be transmitted to the busbar component of the battery through the riveting block. In the above arrangement, a long distance is present between the surface of the riveting block facing away from the wall portion of the housing and a wall portion of the battery provided with the electrode terminal, reducing a proportion of a volume inside the battery cell for storing electrical energy (a volume inside the housing) to a total volume of the battery, thereby reducing the energy density of the battery.

In view of this, the present application provides a battery cell including a housing, an electrode terminal, and a fixing member, where the housing includes a first wall, and the first wall is provided with a first through hole. The electrode terminal includes a main body and a step portion. At least a portion of the main body passes through the first through hole. The step portion and the main body are integrally formed. The step portion protrudes from a peripheral surface of the main body. The step portion is located on an outer side of the first wall. The fixing member is provided with a second through hole for the main body to pass through. In a thickness direction of the first wall, at least a portion of the fixing member is located between the first wall and the step portion and abuts against the step portion. In the thickness direction of the first wall, the main body has a first end surface facing away from an interior of the housing, the fixing member has a second end surface facing away from the first wall, and the first end surface extends beyond the second end surface. The largest surface of the battery cell extending beyond an outer surface of the first wall is the first end surface. When electrode terminals of the same specification are used, the height of the battery cell extending beyond the first wall can be correspondingly reduced, increasing a proportion of a space inside the housing of the battery cell to a total space of a battery, thereby increasing the energy density of the battery.

The technical solutions described in the embodiments of the present application are applicable to battery cells, batteries, and electric devices using batteries.

The electric devices include but are not limited to electric bicycles, electric vehicles, ships, aircraft, and the like. For example, the aircraft include airplanes, rockets, space shuttles, spacecraft, and the like.

For ease of description, an electric device according to an embodiment of the present application being a vehicle is used as an example for description of the following embodiments.

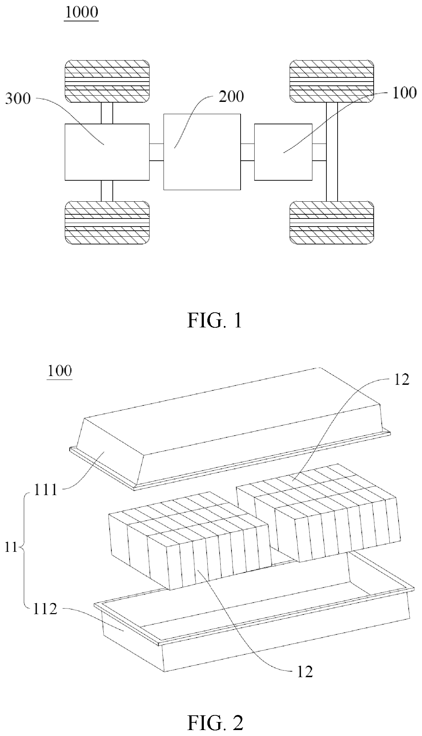

For example, FIG. 1 is a schematic structural diagram of a vehicle 1000 according to some embodiments of the present application. The vehicle 1000 may be a fuel vehicle, a gas vehicle, or a new energy vehicle. The new energy vehicle may be a battery electric vehicle, a hybrid vehicle, an extended-range vehicle, or the like. A motor 300, a controller 200, and a battery 100 may be provided inside the vehicle 1000. The controller 200 is configured to control the battery 100 to supply power to the motor 300. For example, the battery 100 may be provided at the bottom or head or tail of the vehicle 1000. The battery 100 may be configured to supply power to the vehicle 1000. For example, the battery 100 may serve as an operating power source of the vehicle 1000 for a circuit system of the vehicle 1000, for example, to satisfy power needs of start, navigation, and running of the vehicle 1000. In another embodiment of the present application, the battery 100 may not only serve as an operating power source of the vehicle 1000 but also serve as a driving power source of the vehicle 1000, replacing or partially replacing fuel or natural gas to provide driving traction for the vehicle 1000.

To meet different power requirements, the battery 100 may include a plurality of battery cells 12, where the plurality of battery cells 12 may be connected in series, parallel, or series-parallel, where being connected in series-parallel means a combination of series and parallel connections. The battery 100 may also be referred to as a battery pack. Optionally, the plurality of battery cells 12 may be connected in series, parallel, or series-parallel to form a battery module first, and then the plurality of battery modules may be connected in series, parallel, or series-parallel to form the battery 100. That is, the plurality of battery cells 12 may directly form the battery 100, or may first form battery modules, and then the battery modules form the battery 100.

For example, referring to FIG. 2, FIG. 2 is an exploded view of a battery 100 according to some embodiments of the present application. The battery 100 may include a plurality of battery cells 12. The battery 100 may further include a box 11. The box 11 has a hollow structure inside. The plurality of battery cells 12 are accommodated in the box 11. As shown in FIG. 2, the box 11 is referred to herein as a first portion 111 and a second portion 112, respectively. The first portion 111 and the second portion 112 are fastened together. The shapes of the first portion 111 and the second portion 112 may be determined according to the shape of a combination of the plurality of battery cells 12. Each of the first portion 111 and the second portion 112 may have an opening. For example, each of the first portion 111 and the second portion 112 may be a hollow cuboid with only one surface being an opening surface. The opening of the first portion 111 and the opening of the second portion 112 are disposed opposite each other. The first portion 111 and the second portion 112 are snap-fitted together to form the box 11 with a sealed chamber. The plurality of battery cells 12 are connected in parallel, series, or series-parallel, and then placed in the box 11 formed after the first portion 111 and the second portion 112 are snap-fitted.

Optionally, the battery 100 may further include other structures. Details are not further described. For example, the battery 100 may further include a busbar component. The busbar component is configured to achieve electrical connection between the plurality of battery cells 12, for example, a parallel connection, a series connection, or a series-parallel connection. Specifically, the busbar component can achieve electrical connection between the battery cells 12 by connecting electrode terminals 123 of the battery cells 12. Further, the busbar component may be fixed to the electrode terminals 123 of the battery cells 12 by welding. Electrical energy of the plurality of battery cells 12 may be further led out through a conductive mechanism passing through the box 11.

Depending on different power requirements, the number of battery cells 12 may be set to any value. The plurality of battery cells 12 may be connected in series, parallel, or series-parallel to achieve larger capacity or power. Since a large number of battery cells 12 may be included in each battery 100, for ease of installation, the battery cells 12 may be grouped. Each group of battery cells 12 form a battery module. The number of battery cells 12 included in the battery module is not limited and may be set according to requirements. The battery 100 may include a plurality of battery modules. The battery modules may be connected in series, parallel, or series-parallel.

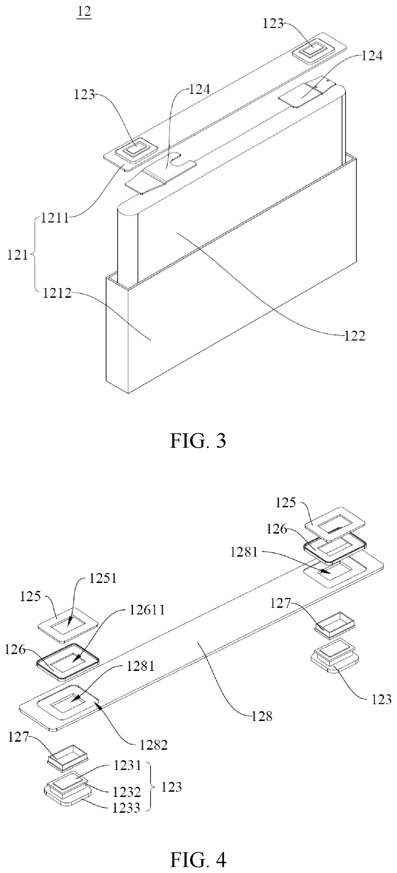

Referring to FIG. 3 which is an exploded view of a battery cell 12 according to some embodiments of the present application, the battery cell 12 includes one or more electrode assemblies 122 and a housing 121. The housing 121 may include a housing body 1212. A plurality of wall portions of the housing body 1212, which are a plurality of wall portions of the housing 121, enclose a cavity. The cavity can be used for accommodating the electrode assemblies 122. The housing body 1212 is determined according to the shape of a combination of one or more electrode assemblies 122. For example, the housing body 1212 may be a cuboid, a cube or a regular polyhedron, and one surface of the housing body 1212 has an opening so that one or more electrode assemblies 122 can be placed in the housing body 1212. The housing body 1212 is filled with an electrolyte, such as a liquid electrolyte.

The battery cell 12 may further include two electrode terminals 123. The two electrode terminals 123 may be disposed on an end cover 1211. The end cover 1211 is typically of a flat plate. The two electrode terminals 123 are fixed on a flat surface of the end cover 1211. The two electrode terminals 123 are a positive electrode terminal 123 and a negative electrode terminal 123, respectively. Each electrode terminal 123 is correspondingly provided with an adapting piece 124 located between the end cover 1211 and the electrode assembly 122 and configured to electrically connect the electrode assembly 122 and the electrode terminal 123. In the battery cell 12, depending on actual use requirements, one or more electrode assemblies 122 may be provided. A plurality of independent electrode assemblies 122 are provided in the battery cell 12.

According to some embodiments of the present application, referring to FIGs. 4 to 7, the present application provides a battery cell 12 including a housing 121, an electrode terminal 123, and a fixing member 125. The housing 121 includes a first wall 128. The first wall 128 is provided with a first through hole 1281. The electrode terminal 123 includes a main body 1231 and a step portion 1232. At least a portion of the main body 1231 passes through the first through hole 1281. The step portion 1232 and the main body 1231 are integrally formed. The step portion 1232 protrudes from a peripheral surface of the main body 1231. The step portion 1232 is located on an outer side of the first wall 128. The fixing member 125 is made of a metal material, and the fixing member 125 is provided with a second through hole 1251 for the main body 1231 to pass through. In a thickness direction of the first wall 128, at least a portion of the fixing member 125 is located between the first wall 128 and the step portion 1232 and abuts against the step portion 1232. In the thickness direction of the first wall 128, the main body 1231 has a first end surface 12311 facing away from an interior of the housing 121. The fixing member 125 has a second end surface 1252 facing away from the first wall 128. The first end surface 12311 extends beyond the second end surface 1252.

The housing 121 is a component for accommodating the electrode assembly 122, and the housing 121 may also be configured to accommodate an electrolyte, such as a liquid electrolyte. In some embodiments, the housing 121 includes a housing body 1212 and an end cover 1211. An accommodation cavity is formed inside the housing body 1212, and the accommodation cavity is used for accommodating the electrode assembly 122. The housing body 1212 has an opening in communication with the accommodation cavity. The end cover 1211 covers the opening of the housing body 1212 and forms a sealed connection to form a sealed space for accommodating the electrode assembly 122 and the electrolyte. Optionally, the housing 121 may further include a bottom plate. Openings are respectively formed at two ends of the housing body 1212. One opening is sealed by the end cover 1211, and the other opening is sealed by the bottom plate.

In some embodiments, a material of the housing 121 may be metal or a combination of metal and non-metal. For example, the housing 121 may be made of metal, such as aluminum, copper, iron, steel, or aluminum alloy. Alternatively, a portion of the housing 121 may be made of metal, and the remaining portion may be made of non-metal. For example, the end cover 1211 of the housing 121 may be made of metal. The housing body 1212 or other portions of the housing 121 may be made of a non-metal material.

In some embodiments, when the battery cell 12 is assembled, the electrode assembly 122 may be first placed into the housing body 1212, and a liquid electrolyte may be filled into the housing body 1212, and then the end cover 1211 may be covered on the opening of the housing body 1212 to complete the assembly of the battery cell 12. Alternatively, in some embodiments, when the battery cell 12 is assembled, the electrode assembly 122 may be first placed into the housing body 1212, then the end cover 1211 may be covered on the opening of the housing body 1212, and then the liquid electrolyte may be filled into the housing body 1212 through an electrolyte injection hole on the end cover 1211 or other portions of the housing 121. Then, the electrolyte injection hole may be sealed to complete the assembly of the battery cell 12.

The housing 121 may have various shapes, such as a cylindrical structure or a prismatic structure. The shape of the housing 121 may be determined according to the specific shape of the electrode assembly 122. For example, if the electrode assembly 122 has a cylindrical structure, a cylindrical housing 121 may be selected. If the electrode assembly 122 is a square electrode assembly, a square housing may be selected.

The first wall 128 is a partial structure of the housing 121. The electrode terminal 123 may be mounted on the first wall 128. The electrode terminal 123 may be connected to a tab of the electrode assembly 122 through an adapter. In some embodiments, the electrode terminal 123 may be mounted on the first wall 128 in an insulating manner. For example, an insulating member is provided between the electrode terminal 123 and the first wall 128, and the insulating member is insulated and isolated from the electrode terminal 123 and the first wall 128. In some embodiments, the electrode terminal 123 may be mounted on the first wall 128. For example, the electrode terminal 123 is directly mounted on the first wall 128. In this case, the first wall 128 may be made of a conductive material or an insulating material. In some embodiments, the first wall 128 may be made of a conductive material, such as a metal material. For example, the first wall 128 is made of aluminum, copper, iron, aluminum, steel, aluminum alloy, or the like. In some other embodiments, the first wall 128 may be made of a non-metal material, such as plastic.

In some embodiments, the first wall 128 may be the end cover 1211 of the housing 121. The housing body 1212 of the housing 121 is disposed around an edge of the first wall 128. The first wall 128 may be connected to the housing body 1212 of the housing 121 by welding, bonding, snap-fitting, or other connection methods. Alternatively, the first wall 128 and the housing body 1212 may be integrally formed.

The electrode terminal 123 is a component mounted on the first wall 128. The electrode terminal 123 may be connected to the tab of the electrode assembly 122 through the adapter for allowing current to flow into or out of the tab via the electrode terminal 123. In some embodiments, the electrode terminal 123 may have a cylindrical structure or a polygonal prism structure. In some embodiments, the electrode terminal 123 is made of a metal material, for example, aluminum, copper, iron, steel, alloy, or composite metal.

The inner side described below is relative to the electrode assembly 122. The housing 121 typically has an accommodation cavity for accommodating the electrode assembly 122, one side of a wall portion of the housing 121 facing the accommodation cavity is collectively referred to as an inner side, and one side of the wall portion of the housing 121 facing away from the accommodation cavity is collectively referred to as an outer side.

The step portion 1232 and the main body 1231 may be integrally formed by machining, or a part of the material of the main body 1231 is upset to a peripheral side of the main body 1231 to form the step portion 1232. In an embodiment where the step portion 1232 and the main body 1231 are integrally formed by machining, in some cases, the fixing member 125 may be first fixed to the first wall 128 by a fastener, and then after the step portion 1232 abuts against the fixing member 125, the step portion 1232 may be welded to the fixing member 125 to complete the assembly of the electrode terminal 123.

The first end surface 12311 extending beyond the second end surface 1252 means that on an outer side of the battery 100, in the thickness direction of the first wall 128, the second end surface 1252 is located between the first end surface 12311 and an outer surface of the first wall 128. In other words, a surface farthest from the outer surface of the first wall 128 is the first end surface 12311 of the electrode terminal 123.

In some embodiments, the first end surface 12311 of the electrode terminal 123 may be welded to a busbar of a busbar component to achieve electrical connection between the battery cell 12 and the busbar component to lead out the electrical energy stored inside the battery cell 12. In other words, the fixing member 125 only serves to achieve the assembly of the electrode terminal 123 and does not serve to conduct electrical energy.

An outer contour of the fixing member 125 may include but is not limited to a circular shape, an elliptical shape, a polygonal shape, a semicircular shape, and the like.

The fixing member 125 is made of a metal material, such as aluminum, copper, iron, steel, alloy, or composite metal.

The step portion 1232 may be continuously distributed along a circumferential direction of the main body 1231, that is, the step portion 1232 is annular. Alternatively, the step portion 1232 may be segmented along the circumferential direction of the main body 1231, that is, the step portion 1232 is divided into a plurality of portions, where at least one portion abuts against the fixing member 125.

The first through hole 1281 may be a smooth hole or a stepped hole. In an embodiment where the first through hole 1281 is a stepped hole, a cross-section of the stepped hole may include at least one straight segment and/or at least one oblique segment and/or at least one arc segment.

The second through hole 1251 may be a smooth hole or a segmented stepped hole. In an embodiment where the second through hole 1251 is a stepped hole, a cross-section of the stepped hole may include at least one straight segment and/or at least one oblique segment and/or at least one arc segment.

The peripheral surface of the main body 1231 may refer to a peripheral surface of a cylinder or a peripheral surface of a prism connecting a top surface and a bottom surface of the prism. In an example where the main body 1231 is a quadrangular prism, the main body 1231 includes a top surface, a bottom surface, and four side surfaces. The four side surfaces are sequentially connected and are disposed around the top surface. Two ends of the four side surfaces in a direction from the top surface to the bottom surface are connected to the top surface and the bottom surface, respectively. The above four side surfaces each refer to the peripheral surface of the main body 1231.

In some embodiments, the first end surface 12311 is provided with a first groove 1234, and a side surface of the first groove 1234 may also be referred to as the peripheral surface of the main body 1231. In this embodiment, a cross-section of the main body 1231 is similar to an inverted-T shape.

In the technical solutions of the embodiments of the present application, the housing 121 includes the first wall 128. The first wall 128 is provided with the first through hole 1281. The electrode terminal 123 includes the main body 1231 and the step portion 1232. At least a portion of the main body 1231 passes through the first through hole 1281. The step portion 1232 and the main body 1231 are integrally formed. The step portion 1232 protrudes from the peripheral surface of the main body 1231. The step portion 1232 is located on the outer side of the first wall 128. The fixing member 125 is provided with the second through hole 1251 for the main body 1231 to pass through. In the thickness direction of the first wall 128, at least a portion of the fixing member 125 is located between the first wall 128 and the step portion 1232 and abuts against the step portion 1232. In the thickness direction of the first wall 128, the main body 1231 has a first end surface 12311 facing away from the interior of the housing 121. The fixing member 125 has the second end surface 1252 facing away from the first wall 128. The first end surface 12311 extends beyond the second end surface 1252. With such a design, in the thickness direction of the first wall 128, a surface of the battery cell 12 with a maximum height extending beyond an outer surface of the first wall 128 is the first end surface 12311, and when electrode terminals 123 of the same specification are used, the height of the battery cell 12 extending beyond the first wall 128 can be correspondingly reduced, increasing a proportion of a space inside the housing 121 of the battery cell 12 to a total space of the battery 100, thereby increasing the energy density of the battery 100.

According to some embodiments of the present application, referring to FIGs. 4 to 7, the yield strength of the fixing member 125 is greater than the yield strength of the electrode terminal 123.

The yield strength of the fixing member 125 being greater than the yield strength of the electrode terminal 123 means that when an external force acts on the electrode terminal 123 and the fixing member 125, the fixing member 125 is less likely to undergo plastic deformation compared to the electrode terminal 123, for example, the step portion 1232 of the electrode terminal 123. If the strength of the electrode terminal 123 is greater than the strength of the fixing member 125, after the step portion 1232 of the electrode terminal 123 overlaps the fixing member 125, an external force acts on the electrode terminal 123, for example, when the external force acts on the step portion 1232, the fixing member 125 is prone to large plastic deformation. In this case, on the one hand, the electrode terminal 123 is prone to shaking, and on the other hand, the sealing between the electrode terminal 123 and the housing 121 is prone to failure.

Typically, for the same material, a larger thickness of the material leads to greater yield strength. This is because an increase in the thickness of the material can cause greater deformation of the material, thereby consuming more strain energy and improving the yield strength of the material. In addition, the yield strength of the fixing member 125 being greater than the yield strength of the electrode terminal 123 means that when the design value of the yield strength of the electrode terminal 123 is fixed, a relatively thin fixing member 125 can be selected to achieve the preset yield strength of the fixing member 125.

The yield strength of the fixing member 125 is greater than the yield strength of the electrode terminal 123. With such a design, when a stable connection is formed between the step portion 1232 and the fixing member 125, the thickness of the fixing member 125 can be relatively small, thereby allowing the height of the electrode terminal 123 extending beyond the outer surface of the first wall 128 to be further reduced, and further increasing the energy density of the battery 100.

In the present application, the following material samples may refer to the fixing member 125 or a portion of the fixing member 125 or the main body 1231 or a portion of the main body 1231. There are many methods for detecting yield strength, for example, tensile test: in a tensile test, before the material sample is loaded to fracture, the yield strength can be calculated by measuring load and deformation. For example, compression test: in a compression test, before the material sample is loaded to yield, the yield strength can be obtained by measuring load and deformation. For example, bending test: a bending moment is applied to the sample, and the deformation of the sample is observed to obtain the yield strength. A suitable method can be selected according to actual conditions for detection.

According to some embodiments of the present application, referring to FIGs. 4 to 7, the yield strength of the fixing member 125 is σs1, and the yield strength of the electrode terminal 123 is σs2, satisfying: 1.1 ≤ σs1/σs2 ≤ 10.

The ratio of the yield strength of the fixing member 125 to the yield strength of the electrode terminal 123 may be any value between 1.1 and 10, for example, 1.1, 1.5, 2, 2.5, 3, 3.5, 4, 4.5, 5, 5.5, 6, 6.5, 7, 7.5, 8, 8.5, 9, 9.5, or 10.

By designing the ratio of the yield strength of the fixing member 125 to the yield strength of the electrode terminal 123 within a reasonable range, the deformation caused by the assembly force when the electrode terminal 123 and the fixing member 125 are connected can be controlled within a controllable range, reducing the assembly difficulty, reducing the risk of damage to the electrode terminal 123, and improving the stability of the connection between the two.

According to some embodiments of the present application, referring to FIGs. 4 to 7, 3 ≤ σs1/σs2 ≤ 5.

The ratio of the yield strength of the fixing member 125 to the yield strength of the electrode terminal 123 may be any value between 3 and 5, for example, 3, 3.1, 3.2, 3.3, 3.4, 3.5, 3.6, 3.7, 3.8, 3.9, 4, 4.1, 4.2, 4.3, 4.4, 4.5, 4.6, 4.7, 4.8, 4.9, or 5.

By designing the ratio of the yield strength of the fixing member 125 to the yield strength of the electrode terminal 123 within a reasonable range, the deformation caused by the assembly force when the electrode terminal 123 and the fixing member 125 are connected can be controlled within a controllable range, further reducing the assembly difficulty, significantly reducing the risk of damage to the electrode terminal 123, and further improving the stability of the connection between the two.

According to some embodiments of the present application, referring to FIGs. 4 to 7, 205 Mpa ≤ σs1 ≤ 250 Mpa, 40 Mpa ≤ σs2 ≤ 55 Mpa.

The yield strength of the fixing member 125 may be any value between 205 Mpa and 250 Mpa, for example, 205 Mpa, 210 Mpa, 215 Mpa, 220 Mpa, 225 Mpa, 230 Mpa, 235 Mpa, 240 Mpa, 245 Mpa, or 250 Mpa.

The yield strength of the electrode terminal 123 may be 40 Mpa, 41 Mpa, 42 Mpa, 43 Mpa, 44 Mpa, 45 Mpa, 46 Mpa, 47 Mpa, 48 Mpa, 49 Mpa, 50 Mpa, 51 Mpa, 52 Mpa, 53 Mpa, 54 Mpa, or 55 Mpa.

By designing the yield strength of the fixing member 125 and the yield strength of the electrode terminal 123 within a reasonable range, the plasticity and brittleness of the fixing member 125 and the electrode terminal 123 can be controlled within a controllable range, reducing the risk of damage to the fixing member 125 and the electrode terminal 123 during assembly.

According to some embodiments of the present application, referring to FIGs. 4 to 7, in the thickness direction of the first wall 128, a height difference between the first end surface 12311 and the second end surface 1252 is D, and a thickness of the step portion 1232 is t, satisfying: 1.1 ≤ D/t ≤ 6.

In the thickness direction of the first wall 128, the ratio of the height difference between the first end surface 12311 and the second end surface 1252 to the thickness of the step portion 1232 may be any value between 1.1 and 6, for example, 1.1, 1.2, 1.3, 1.4, 1.5, 1.6, 1.7, 1.8, 1.9, 2, 2.1, 2.2, 2.3, 2.4, 2.5, 2.6, 2.7, 2.8, 2.9, 3, 3.1, 3.2, 3.3, 3.4, 3.5, 3.6, 3.7, 3.8, 3.9, 4, 4.1, 4.2, 4.3, 4.4, 4.5, 4.6, 4.7, 4.8, 4.9, 5, 5.1, 5.2, 5.3, 5.4, 5.5, 5.6, 5.7, 5.8, 5.9, or 6.

In the thickness direction of the first wall 128, by designing the ratio of the height difference between the first end surface 12311 and the second end surface 1252 to the thickness of the step portion 1232 within a reasonable range, the risk of connection failure between the step portion 1232 and the fixing member 125 when the battery cell 12 is subjected to an external force can be reduced, improving the stability of the connection between the step portion 1232 and the fixing member 125.

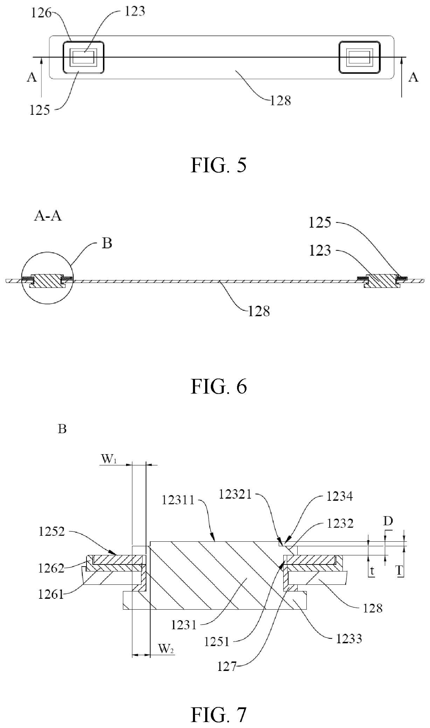

According to some embodiments of the present application, referring to FIG. 7, 0.5 mm ≤ D ≤ 3 mm, and 0.5 mm ≤ t ≤ 2.5 mm.

In the thickness direction of the first wall 128, the height difference between the first end surface 12311 and the second end surface 1252 may be any value between 0.5 mm and 3 mm, for example, 0.5 mm, 0.6 mm, 0.7 mm, 0.8 mm, 0.9 mm, 1 mm, 1.1 mm, 1.2 mm, 1.3 mm, 1.4 mm, 1.5 mm, 1.6 mm, 1.7 mm, 1.8 mm, 1.9 mm, 2 mm, 2.1 mm, 2.2 mm, 2.3 mm, 2.4 mm, 2.5 mm, 2.6 mm, 2.7 mm, 2.8 mm, 2.9 mm, or 3 mm.

In the thickness direction of the first wall 128, the thickness of the step portion 1232 may be any value between 0.5 mm and 2.5 mm, for example, 0.5 mm, 0.6 mm, 0.7 mm, 0.8 mm, 0.9 mm, 1 mm, 1.1 mm, 1.2 mm, 1.3 mm, 1.4 mm, 1.5 mm, 1.6 mm, 1.7 mm, 1.8 mm, 1.9 mm, 2 mm, 2.1 mm, 2.2 mm, 2.3 mm, 2.4 mm, or 2.5 mm.

In the thickness direction of the first wall 128, by designing the height difference between the first end surface 12311 and the second end surface 1252 and the thickness of the step portion 1232 within a reasonable range, the energy density of the battery 100 can be increased while ensuring good connection stability between the two as much as possible.

According to some embodiments of the present application, referring to FIGs. 4 to 7, in a radial direction of the main body 1231, the fixing member 125 extends beyond a peripheral surface of the step portion 1232.

The radial direction of the main body 1231 refers to a direction perpendicular to an axis of the main body 1231 or a direction from a center of any cross-section perpendicular to the axis of the main body 1231 to each point on an edge of the cross-section. In the thickness direction of the first wall 128, the main body 1231 may include a plurality of portions. Each portion has its own axis, and the radial direction refers to a direction perpendicular to the axis of the corresponding main body 1231 in each portion.

In the radial direction of the main body 1231, the fixing member 125 extends beyond the peripheral surface of the step portion 1232. With such a design, after the step portion 1232 abuts against the fixing member 125, the step portion 1232 does not come into contact with other components of the battery cell 12, and only the characteristics of the fixing member 125 and the step portion 1232 need to be considered to control the connection stability between the electrode terminal 123 and the fixing member 125, reducing the design difficulty.

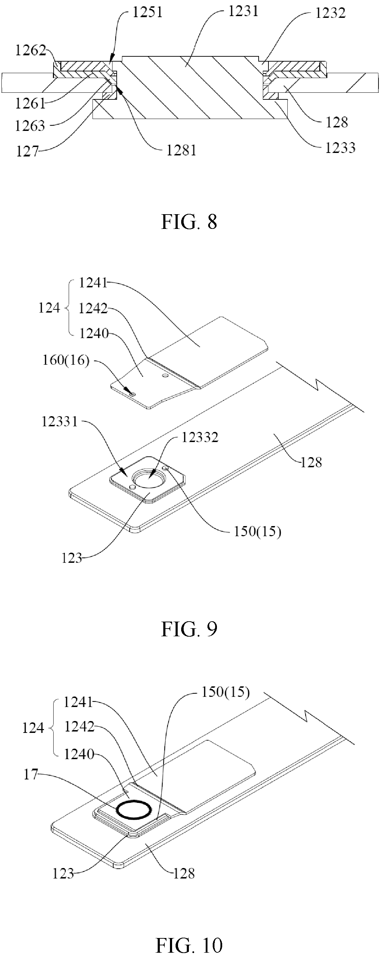

According to some embodiments of the present application, referring to FIG. 8, in the radial direction of the main body 1231, a projection of the fixing member 125 at least partially overlaps a projection of the step portion 1232.

In the radial direction of the main body 1231, the projection of the fixing member 125 at least partially overlapping the projection of the step portion 1232 means that in the thickness direction of the first wall 128, at least a portion of the step portion 1232 is accommodated in the fixing member 125.

In some embodiments, the fixing member 125 is provided with an annular groove, and the annular groove can accommodate a portion of the step portion 1232.

In the radial direction of the main body 1231, the projection of the fixing member 125 at least partially overlaps the projection of the step portion 1232. With such a design, a height of the step portion 1232 extending beyond the outer surface of the first wall 128 is further reduced, further increasing the energy density of the battery 100.

According to some embodiments of the present application, referring to FIG. 8, at least a portion of the step portion 1232 is accommodated in the second through hole 1251.

In some embodiments, the second through hole 1251 includes a first segment and a second segment, where in the thickness direction of the first wall 128, the second segment is located between the first segment and the first wall 128. A diameter of the second segment is greater than a diameter of the first segment. The second segment and the first segment form a stepped hole. The step portion 1232 overlaps a bottom wall of the second segment.

The second through hole 1251 is used to accommodate a portion of the step portion 1232, eliminating the need for additionally processing a space to accommodate the step portion 1232, reducing the processing steps, reducing costs, and improving structural consistency of the fixing member 125.

According to some embodiments of the present application, referring to FIG. 8, a diameter of the second through hole 1251 gradually decreases along a direction approaching the first wall 128, and the step portion 1232 abuts against a hole wall of the second through hole 1251.

The diameter of the second through hole 1251 gradually decreasing along the direction approaching the first wall 128 means that the hole wall of the second hole is a conical surface. Generally, as compared to a case where the second through hole 1251 is a multi-segment stepped hole and the step portion 1232 needs to come into contact with the hole wall surface to maintain relatively stable connection strength, the step portion 1232 only needs to be in point-contact with the conical hole wall to form a relatively stable connection, resulting in lower assembly difficulty.

When the step portion 1232 is connected to the fixing member 125, a larger fitting tolerance range is reserved, reducing the assembly difficulty.

According to some embodiments of the present application, referring to FIG. 8, the step portion 1232 has a third end surface 12321 facing away from the first wall 128, and in the thickness direction of the first wall 128, the second end surface 1252 extends beyond the third end surface 12321 or is flush with the third end surface 12321.

In the thickness direction of the first wall 128, the second end surface 1252 extending beyond the third end surface 12321 or being flush with the third end surface 12321 means that in an embodiment where the battery cell 12 includes the fixing member 125, the step portion 1232 does not additionally occupy extra space inside the battery 100.

The step portion 1232 has the third end surface 12321 facing away from the first wall 128, and in the thickness direction of the first wall 128, the second end surface 1252 extends beyond the third end surface 12321 or is flush with the third end surface 12321. Such a design means that in the thickness direction of the first wall 128, the step portion 1232 is completely accommodated inside the fixing member 125, further increasing the energy density of the battery 100.

According to some embodiments of the present application, referring to FIG. 7, in the radial direction of the main body 1231, a dimension by which the step portion 1232 protrudes from the peripheral surface of the main body 1231 is W₁, and 0.1 mm ≤ W₁ ≤ 5 mm.

The dimension by which the step portion 1232 protrudes from the peripheral surface of the main body 1231 may be any value between 0.1 mm and 5 mm, for example, 0.1 mm, 0.2 mm, 0.4 mm, 0.6 mm, 0.8 mm, 1 mm, 1.2 mm, 1.4 mm, 1.6 mm, 1.8 mm, 2 mm, 2.2 mm, 2.4 mm, 2.6 mm, 2.8 mm, 3 mm, 3.2 mm, 3.4 mm, 3.6 mm, 3.8 mm, 4 mm, 4.2 mm, 4.4 mm, 4.6 mm, 4.8 mm, or 5 mm.

The dimension by which the step portion 1232 protrudes from the peripheral surface of the main body 1231 is designed within a reasonable range, helping to increase a contact area between the step portion 1232 and the fixing member 125, thereby helping to improve the connection strength between the step portion 1232 and the fixing member 125.

According to some embodiments of the present application, referring to FIGs. 4 and 7, an edge of the first end surface 12311 is provided with a first groove 1234 extending along a circumferential direction of the main body 1231, the step portion 1232 has a fourth end surface facing away from the first wall 128, and the fourth end surface is coplanar with a bottom surface of the first groove 1234.

In some embodiments, a certain pressure may be applied to the edge of the first end surface 12311 by an upsetting device, thereby forming the first groove 1234 in the circumferential direction of the main body 1231, and an original material in the first groove 1234 is squeezed to a circumferential side of the main body 1231 to form the step portion 1232.

The edge of the first end surface 12311 is provided with the first groove 1234 extending along the circumferential direction of the main body 1231, the step portion 1232 has the fourth end surface facing away from the first wall 128, and the fourth end surface is coplanar with the bottom surface of the first groove 1234. With such a design, the step portion 1232 can be formed by upsetting, and the electrode terminal 123 and the fixing member 125 can be connected by riveting, resulting in lower assembly costs and assembly difficulty.

According to some embodiments of the present application, referring to FIG. 7, in the radial direction of the main body 1231, a distance between a side surface of the first groove 1234 and the peripheral surface of the step portion 1232 is W₂, satisfying: 0.5 mm ≤ W₂ ≤ 10 mm.

The distance between the side surface of the first groove 1234 and the peripheral surface of the step portion 1232 may be any value between 0.5 mm and 10 mm, for example, 0.5 mm, 1 mm, 1.5 mm, 2 mm, 2.5 mm, 3 mm, 3.5 mm, 4 mm, 4.5 mm, 5 mm, 5.5 mm, 6 mm, 6.5 mm, 7 mm, 7.5 mm, 8 mm, 8.5 mm, 9 mm, 9.5 mm, or 10 mm.

By designing the distance between the side surface of the first groove 1234 and the peripheral surface of the step portion 1232 within a reasonable range, the difficulty of forming the step portion 1232 by upsetting can be reduced, thereby reducing the assembly difficulty and direct costs of devices.

According to some embodiments of the present application, referring to FIG. 7, a groove depth of the first groove 1234 is T, satisfying: 0.1 mm ≤ T ≤ 5 mm.

The groove depth of the first groove 1234 may be any value between 0.1 mm and 5 mm, for example, 0.1 mm, 0.2 mm, 0.3 mm, 0.4 mm, 0.5 mm, 0.6 mm, 0.7 mm, 0.8 mm, 0.9 mm, 1 mm, 1.1 mm, 1.2 mm, 1.3 mm, 1.4 mm, 1.5 mm, 1.6 mm, 1.7 mm, 1.8 mm, 1.9 mm, 2 mm, 2.1 mm, 2.2 mm, 2.3 mm, 2.4 mm, 2.5 mm, 2.6 mm, 2.7 mm, 2.8 mm, 2.9 mm, 3 mm, 3.1 mm, 3.2 mm, 3.3 mm, 3.4 mm, 3.5 mm, 3.6 mm, 3.7 mm, 3.8 mm, 3.9 mm, 4 mm, 4.1 mm, 4.2 mm, 4.3 mm, 4.4 mm, 4.5 mm, 4.6 mm, 4.7 mm, 4.8 mm, 4.9 mm, or 5 mm.

By designing the groove depth of the first groove 1234 within a reasonable range, the difficulty of forming the step portion 1232 and the first groove 1234 by upsetting can be reduced, thereby reducing the assembly difficulty and direct costs of devices.

According to some embodiments of the present application, a material of the fixing member 125 includes steel, and a material of the electrode terminal 123 includes aluminum or a copper-aluminum composite material. During production and manufacturing of the battery 100, the application processes of steel, aluminum, or the copper-aluminum composite material are relatively mature, which can reduce the design costs.

According to some embodiments of the present application, referring to FIGs. 7 and 8, the battery cell 12 further includes a first insulating member 126, and at least a portion of the first insulating member 126 is disposed between the fixing member 125 and the first wall 128.

A material of the first insulating member 126 is an insulating material, and the material of the first insulating member 126 may be selected from: polypropylene, polycarbonate, polytetrafluoroethylene, polyvinyl chloride, polyethylene, polyester resin, and other insulating and electrolyte-resistant materials.

The battery cell 12 further includes the first insulating member 126, and at least a portion of the first insulating member 126 is disposed between the fixing member 125 and the first wall 128. On the one hand, the provision of the first insulating member 126 can reduce the risk of short circuit between positive and negative electrode terminals 123 in the battery 100. On the other hand, some components in the battery cell 12 can be positioned, improving the assembly stability of the battery cell 12.

According to some embodiments of the present application, referring to FIGs. 7 and 8, the first insulating member 126 includes a body portion 1261 and a first extension portion 1262. The body portion 1261 is located between the fixing member 125 and the first wall 128. The body portion 1261 is provided with a third through hole 12611 for the electrode terminal 123 to pass through. The first extension portion 1262 is located on a periphery of the fixing member 125 and disposed around an edge of the body portion 1261.

A thickness of the first extension portion 1262 may be the same as a thickness of the body portion 1261, or the thickness of the first extension portion 1262 may be greater or less than the thickness of the body portion 1261. In some embodiments, referring to FIG. 7, cross-sectional shapes of the first extension portion 1262 and the body portion 1261 are two opposite L-shapes.

The first insulating member 126 includes the body portion 1261 and the first extension portion 1262. The body portion 1261 is located between the fixing member 125 and the first wall 128. The body portion 1261 is provided with the third through hole 12611 for the electrode terminal 123 to pass through. The first extension portion 1262 is located on the periphery of the fixing member 125 and disposed around the edge of the body portion 1261. With such a design, the fixing member 125 can be pre-positioned and limited in the radial direction of the main body 1231, reducing the assembly difficulty and improving the assembly stability of the fixing member 125. In addition, the fixing member 125 and the first wall 128 can be insulated and isolated, improving the current flow stability of the electrode terminal 123.

According to some embodiments of the present application, referring to FIGs. 4 and 8, an outer surface of the first wall 128 is provided with a second groove 1282, and the body portion 1261 is located in the second groove 1282.

A contour of the groove may be quadrilateral, pentagonal, hexagonal, or the like. The contour of the groove may include one or more arc segments and at least one straight segment.

The outer surface of the first wall 128 is provided with the second groove 1282, and the body portion 1261 is located in the second groove 1282. With such a design, when the first insulating member 126 is assembled with the first wall 128, pre-positioning can be performed through the second groove 1282, facilitating the assembly of the first insulating member 126.

According to some embodiments of the present application, referring to FIG. 7, in the thickness direction of the first wall 128, an end portion of the first extension portion 1262 extends out of the second groove 1282. With such a design, the insulation between the fixing member 125 and the first wall 128 can be further improved.

According to some embodiments of the present application, referring to FIG. 8, the first insulating member 126 further includes a second extension portion 1263. The second extension portion 1263 is disposed around the third through hole 12611. One end of the second extension portion 1263 is connected to the body portion 1261, and the other end of the second extension portion 1263 extends in a direction approaching the main body 1231.

The other end of the second extension portion 1263 may extend in the direction approaching the main body 1231 along the radial direction of the main body 1231 or extend in the direction approaching the main body 1231 along a direction intersecting the radial direction of the main body 1231. Referring to FIG. 8, an extension direction of the second extension portion 1263 intersects an extension direction of the body portion 1261.

In the embodiments where the diameter of the second through hole 1251 gradually decreases along the direction approaching the first wall 128, the extension direction of the second extension portion 1263 intersects the extension direction of the body portion 1261, and the hole wall of the second through hole 1251 can provide certain support force when the step portion 1232 abuts against the fixing member 125, reducing the risk of the first insulating member 126 being crushed.

The second extension portion 1263 can also provide a pre-positioning effect for the electrode terminal 123, for example, the main body 1231 of the electrode terminal 123.

The first insulating member 126 further includes the second extension portion 1263. The second extension portion 1263 is disposed around the third through hole 12611. One end of the second extension portion 1263 is connected to the body portion 1261, and the other end of the second extension portion 1263 extends in a direction approaching the main body 1231. With such a design, the insulation effect between the electrode terminal 123 and the first wall 128 is improved.

According to some embodiments of the present application, referring to FIGs. 4, 7, and 8, the electrode terminal 123 further includes a limiting portion 1233. The limiting portion 1233 protrudes from the peripheral surface of the main body 1231. The limiting portion 1233 is located on an inner side of the first wall 128. The limiting portion 1233 is configured to limit movement of the electrode terminal 123 toward an exterior of the housing 121.

In an embodiment where the electrode terminal 123 is connected to the first wall 128 by riveting, the electrode terminal 123 may pass through the first through hole 1281 in advance, and the main body 1231 may be upset to form a riveted portion. In this case, under the limitation of the limiting portion 1233, the electrode terminal 123 can be fixed to the first wall 128. In other words, the limiting portion 1233 can limit the movement of the electrode terminal 123 along a direction facing away from an inner side of the battery cell 12.

The electrode terminal 123 further includes the limiting portion 1233. The limiting portion 1233 protrudes from the peripheral surface of the main body 1231. The limiting portion 1233 is located on the inner side of the first wall 128. The limiting portion 1233 is configured to limit movement of the electrode terminal 123 toward the exterior of the housing 121. With such a design, the assembly of the electrode terminal 123 and the housing 121 can be completed by a single riveting, reducing the assembly difficulty.

According to some embodiments of the present application, referring to FIGs. 4, 7, and 8, the battery cell 12 further includes a sealing member 127, and at least a portion of the sealing member 127 is located between the first wall 128 and the limiting portion 1233.

At least a portion of the sealing member 127 being located between the first wall 128 and the limiting portion 1233 means that during the process of riveting the electrode terminal 123 to the first wall 128, the assembly force generated by riveting can cause the first wall 128 and the limiting portion 1233 to squeeze the sealing member 127, causing the sealing member 127 to deform and fill a gap between the first wall 128 and the electrode terminal 123 as much as possible, that is, adaptively completing the assembly and positioning of the sealing member 127 during the riveting of the electrode terminal 123.

The battery cell 12 further includes the sealing member 127, and at least a portion of the sealing member 127 is located between the first wall 128 and the limiting portion 1233. With such a design, the airtightness inside the housing 121 can be improved, improving the operational stability of the battery cell 12.

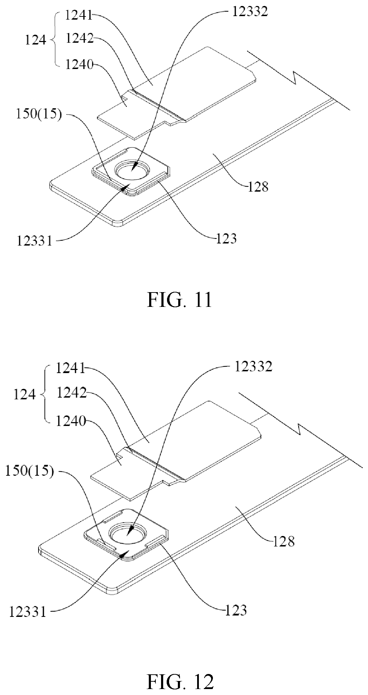

According to some embodiments of the present application, referring to FIGs. 9 to 12, the battery cell 12 further includes an electrode assembly 122 and an adapter, where the electrode assembly 122 is disposed inside the housing 121. The adapter is connected to the electrode terminal 123 and the electrode assembly 122. The electrode terminal 123 is provided with a positioning portion 15. The positioning portion 15 is configured to position the adapter.

In FIGs. 9 to 12, an upper side is an inner side, and a lower side is an outer side.

The battery cell 12 often experiences electrical connection failure between the electrode terminal 123 and the adapter, leading to internal open circuit of the battery cell 12 and affecting the reliability of the battery 100. During the manufacturing process of the battery 100, since there is no positioning structure between the electrode terminal 123 and the adapter, during the welding process of the electrode terminal 123 and the adapter, the problems such as inaccurate welding position and poor welding between the electrode terminal 123 and the adapter are likely to occur, leading to failure of the electrical connection between the electrode terminal 123 and the adapter and affecting the reliability of the battery 100.

The adapter is a component connected to the electrode assembly 122 and the electrode terminal 123. For example, the adapter is connected to a tab of the electrode assembly 122 and the electrode terminal 123. In some embodiments, referring to FIG. 9, the adapter may include a terminal connection portion 1240, a tab connection portion 1241, and an intermediate connection portion 1242 connected to each other. The terminal connection portion 1240 and the tab connection portion 1241 are connected to each other through the intermediate connection portion 1242. The terminal connection portion 1240 is connected to the electrode terminal 123. The tab connection portion 1241 is connected to the tab of the electrode assembly 122. The terminal connection portion 1240 may be welded to the electrode terminal 123. For example, the terminal connection portion 1240 and the electrode terminal 123 may be connected to each other by laser welding. In some embodiments, the electrode terminal 123 is made of a metal material, for example, aluminum, copper, iron, steel, alloy, or composite metal.

The positioning portion 15 is a component disposed on the electrode terminal 123. The function of the positioning portion 15 includes positioning the adapter. The function of positioning the adapter includes allowing a relative positional relationship between the adapter and the electrode terminal 123 to be at a preset position so that during welding of the adapter and the electrode terminal 123, a weld mark is at a correct position, ensuring high welding quality and high connection stability between the adapter and the electrode terminal 123. "A relative positional relationship between the adapter and the electrode terminal 123 being at a preset position" means that the adapter and the electrode terminal 123 may not be connected at the preset position. For example, in some embodiments, a surface of the electrode terminal 123 facing the adapter is formed with a groove. When the adapter and the electrode terminal 123 are not positioned in place, there is a situation where a laser action position during welding falls into the groove, causing a portion of the weld mark to fall into the groove. This situation leads to poor welding between the adapter and the electrode terminal 123, resulting in the problems of low welding quality and connection failure between the adapter and the electrode terminal 123. For another example, in some embodiments, when the adapter and the electrode terminal 123 are not positioned in place, there is a situation where the laser action position during welding falls outside the adapter and/or the electrode terminal 123, causing a portion of the weld mark to fall outside the adapter and/or the electrode terminal 123. This situation leads to poor welding between the adapter and the electrode terminal 123, resulting in the problems of low welding quality and connection failure between the adapter and the electrode terminal 123.

In some embodiments, the positioning portion 15 may include a protrusion provided on the electrode terminal 123 for constraining the adapter to position the adapter. For example, a wall surface of the protrusion can constrain a wall surface of the adapter to achieve positioning of the adapter. In some other embodiments, the positioning portion 15 may include a protrusion and/or a groove, the adapter is correspondingly provided with a groove and/or a protrusion, and the positioning portion 15 and the adapter achieve positioning through concave-convex structure fitting. In still some other embodiments, the positioning portion 15 may include a protrusion provided on the electrode terminal 123 for constraining the adapter to position the adapter; and the positioning portion 15 may include a protrusion and/or a groove, the adapter is correspondingly provided with a groove and/or a protrusion, and the positioning portion 15 and the adapter achieve positioning through concave-convex structure fitting.

The battery cell 12 further includes an electrode assembly 122 and an adapter. The electrode assembly 122 is disposed inside the housing 121. The adapter is connected to the electrode terminal 123 and the electrode assembly 122. The electrode terminal 123 is provided with a positioning portion 15. The positioning portion 15 is configured to position the adapter. With such a design, the adapter can be effectively positioned, allowing the adapter and the electrode terminal 123 to be welded in a correct posture, reducing the risk of an internal open circuit in the battery cell 12 caused by electrical connection failure between the adapter and the electrode terminal 123 due to poor welding, and allowing the battery 100 to have higher reliability.

According to some embodiments of the present application, referring to FIGs. 9 to 12, the adapter is provided with a positioning fitting portion 16. The positioning fitting portion 16 cooperates with the positioning portion 15.

The positioning fitting portion 16 is a component disposed on the adapter. The positioning fitting portion 16 is configured to cooperate with the positioning portion 15 for positioning the adapter.

In some embodiments, the positioning portion 15 and the positioning fitting portion 16 may include concave-convex structures that fit each other, such as grooves and protrusions as well as pins and pin holes. The positioning portion 15 may include a protrusion provided on an end surface of the electrode terminal 123 facing the adapter. The positioning fitting portion 16 may include a groove or a through hole provided on the adapter.

By providing the adapter with the positioning fitting portion 16 that can cooperate with the positioning portion 15, the positioning accuracy between the adapter and the electrode terminal 123 can be effectively improved, thereby effectively reducing the risk of electrical connection failure between the adapter and the electrode terminal 123 due to poor welding, and allowing the battery 100 to have higher reliability.

According to some embodiments of the present application, referring to FIGs. 9 to 12, one of the positioning portion 15 and the positioning fitting portion 16 includes a positioning groove 160, and the other includes a positioning protrusion 150.

The positioning fitting portion 16 and the positioning portion 15 include concave-convex structures that fit each other, the positioning protrusion 150 may be a block structure protruding, and the positioning protrusion 150 may be cylindrical, prismatic, or of other shapes. The positioning groove 160 is a groove structure fitting the positioning protrusion 150. The positioning groove 160 may be a blind hole formed on a surface of the adapter facing the electrode terminal 123 or a through hole formed in the adapter.

In some embodiments, the positioning portion 15 includes a positioning protrusion 150, and the positioning fitting portion 16 includes a positioning groove 160. In some embodiments, the positioning portion 15 may include a positioning groove 160, and the positioning fitting portion 16 includes a positioning protrusion 150. In some other embodiments, the positioning portion 15 may include a positioning groove 160 and a positioning protrusion 150. The positioning fitting portion 16 includes a positioning protrusion 150 and a positioning groove 160. The positioning groove 160 of the positioning portion 15 fits the positioning protrusion 150 of the positioning fitting portion 16. The positioning protrusion 150 of the positioning portion 15 fits the positioning groove 160 of the positioning fitting portion 16.

In some embodiments, when the positioning portion 15 includes a positioning protrusion 150. A material of the positioning protrusion 150 may be the same as or different from the material of the electrode terminal 123. For example, the positioning protrusion 150 is made of a metal material, such as aluminum, copper, iron, steel, alloy, composite metal. For another example, the positioning protrusion 150 is made of a non-metal material, such as plastic. In some embodiments, the positioning protrusion 150 may be connected to the electrode terminal 123 by bonding, welding, threaded member connection, and the like. In some other embodiments, the positioning protrusion 150 may also be integrally manufactured with the electrode terminal 123. In some embodiments, when the positioning portion 15 includes a positioning groove 160, the positioning groove 160 may be formed on the electrode terminal 123 by stamping, hollowing, or other processes, or the positioning groove 160 may be formed based on the formation of the electrode terminal 123. For example, when the electrode terminal 123 is formed by casting, the positioning groove 160 is formed simultaneously. Alternatively, the positioning groove 160 may be formed on the electrode terminal 123 due to the process of assembling the electrode terminal 123 to the first wall 128. For example, the electrode terminal 123 is fixed to the first wall 128 by riveting, and the positioning groove 160 is a groove formed due to the riveting process.

In some embodiments, when the positioning fitting portion 16 includes a positioning protrusion 150, the material of the positioning protrusion 150 may be the same as or different from the material of the adapter. For example, the positioning protrusion 150 is made of a metal material, such as aluminum, copper, iron, steel, alloy, or composite metal. For another example, the positioning protrusion 150 is made of a non-metal material, such as plastic. In some embodiments, the positioning protrusion 150 may be connected to the adapter by bonding, welding, threaded member connection, and the like. In some other embodiments, the positioning protrusion 150 may alternatively be integrally manufactured with the adapter. In some embodiments, when the positioning portion 15 includes a positioning groove 160, the positioning groove 160 may be formed on the adapter by stamping, hole drilling, or other processes, or the positioning groove 160 may be formed based on the formation of the adapter. For example, the adapter is formed by casting, and the positioning groove 160 is formed during casting of the adapter.

By defining one of the positioning portion 15 and the positioning fitting portion 16 to include the positioning groove 160 and the other to include the positioning protrusion 150, the adapter and the electrode terminal 123 are positioned and fitted with each other through a concave-convex structure, so that the positioning accuracy between the adapter and the electrode terminal 123 can be effectively improved, thereby effectively reducing the risk of electrical connection failure between the adapter and the electrode terminal 123 due to poor welding, and allowing the battery 100 to have higher reliability.

According to some embodiments of the present application, referring to FIGs. 9 to 12, along the thickness direction of the first wall 128, the electrode terminal 123 has a first surface 12331 facing the electrode assembly 122, and the first surface 12331 is formed with a third groove 12332. The adapter and the electrode terminal 123 are welded to form a first weld mark 17. Along the thickness direction of the first wall 128, the first weld mark 17 does not overlap the third groove 12332.

The first surface 12331 may be a surface of the electrode terminal 123 facing the electrode assembly 122, and the first surface 12331 may be welded to the adapter to form the first weld mark 17.

The third groove 12332 is a groove structure formed on the first surface 12331. In some embodiments, to increase the mass energy density of the battery cell 12, a groove may be dug on the surface to reduce the mass of the electrode terminal 123. In some embodiments, due to assembly process factors, the surface of the electrode terminal 123 is formed with the third groove 12332. For example, the electrode terminal 123 may be riveted to the first wall 128. During riveting, a riveting head abuts the first surface 12331 in a direction from an inner side surface of the first wall 128 toward an outer side surface to form a flanged portion pressed against the inner side surface of the first wall 128, so that a riveting groove generated by the riveting process is the third groove 12332 formed on the first surface 12331.

"Along the thickness direction of the first wall 128, the first weld mark 17 does not overlap the third groove 12332" can be understood as that laser action positions on the adapter and the electrode terminal 123 do not overlap the third groove 12332 during welding of the adapter and the electrode terminal 123.

To ensure "along the thickness direction of the first wall 128, the first weld mark 17 does not overlap the third groove 12332", the battery cell 12 is provided with a positioning portion 15 to improve the positioning accuracy of the adapter and the electrode terminal 123, reducing the risk of poor welding due to the overlap between the laser action positions on the adapter and the electrode terminal 123 and the third groove 12332.

The first surface 12331 of the electrode terminal 123 is formed with the third groove 12332. To reduce the risk of overlap between a welding position and the third groove 12332 due to inaccurate positioning when assembling the electrode terminal 123 and the adapter, at least a portion of the first weld mark 17 falls into the third groove 12332, resulting in the risk of electrical connection failure between the electrode terminal 123 and the adapter due to poor welding between the electrode terminal 123 and the adapter. In the above solution, by providing the positioning portion 15 on the electrode terminal 123, the adapter can be effectively positioned, allowing the adapter and the electrode terminal 123 to be welded in a correct posture, reducing the risk of electrical connection failure between the adapter and the electrode terminal 123 due to poor welding, and allowing the battery 100 to have higher reliability.

According to some embodiments of the present application, referring to FIGs. 9 to 12, the first weld mark 17 is disposed around the third groove 12332.

The first weld mark 17 may be annular and surround the third groove 12332. In some embodiments, the first weld mark 17 may completely or partially surround the third groove 12332. In some embodiments, the first weld mark 17 may be at least a portion of a circular ring, at least a portion of a square ring, or the like.

By disposing the first weld mark 17 around the third groove 12332, a connection area between the adapter and the electrode terminal 123 can be increased, improving the connection stability between the adapter and the electrode terminal 123, reducing the risk of electrical connection failure, and allowing the battery 100 to have higher reliability.

According to some embodiments of the present application, referring to FIGs. 9 to 12, the housing 121 includes a housing body 1212 and an end cover 1211, where the housing body 1212 includes a bottom wall and a side wall disposed around the bottom wall. One end of the side wall is connected to the bottom wall, and the other end encloses an opening. The end cover 1211 is configured to cover the opening. The first wall 128 is the end cover 1211 or the bottom wall. With such a design, the application scenarios of the battery cell 12 are expanded.

According to some embodiments of the present application, the present application provides a battery 100 including the battery cell 12 described in any of the above solutions.

According to some embodiments of the present application, referring to FIGs. 4, 7, and 8, the battery 100 further includes a busbar component. The busbar component is welded to the electrode terminal 123 to form a second weld mark. A central axis of the first through hole 1281 passes through the second weld mark.

The busbar component is welded to the electrode terminal 123 to form the second weld mark, and the central axis of the first through hole 1281 passes through the second weld mark. This means that the busbar component is directly electrically connected to the electrode terminal 123 without adapting connection through a connection member such as a riveting block, reducing the risk of poor current flow stability of the battery cell 12 due to excessive contact resistance from excessive adapting surfaces.

The battery 100 further includes the busbar component, the busbar component is welded to the electrode terminal 123 to form the second weld mark, and the central axis of the first through hole 1281 passes through the second weld mark. With such a design, electrical connection can be formed by direct welding between the electrode terminal 123 and the busbar component, improving the current flow stability of the battery cell 12.

According to some embodiments of the present application, the present application provides an electric device including the battery 100 described in any of the above solutions, where the battery 100 is configured to provide electrical energy.

According to some embodiments of the present application, referring to FIGs. 4 to 7, the present application provides a battery cell 12 including a housing 121, an electrode terminal 123, and a fixing member 125. The housing 121 includes a first wall 128. The first wall 128 is provided with a first through hole 1281. The electrode terminal 123 includes a main body 1231 and a step portion 1232. At least a portion of the main body 1231 passes through the first through hole 1281. The step portion 1232 and the main body 1231 are integrally formed. The step portion 1232 protrudes from a peripheral surface of the main body 1231. The step portion 1232 is located on an outer side of the first wall 128. The fixing member 125 is provided with a second through hole 1251 for the main body 1231 to pass through. In a thickness direction of the first wall 128, at least a portion of the fixing member 125 is located between the first wall 128 and the step portion 1232 and abuts against the step portion 1232. In the thickness direction of the first wall 128, the main body 1231 has a first end surface 12311 facing away from an interior of the housing 121. The fixing member 125 has a second end surface 1252 facing away from the first wall 128. The first end surface 12311 extends beyond the second end surface 1252. The yield strength of the fixing member 125 is greater than the yield strength of the electrode terminal 123. An edge of the first end surface 12311 is provided with a first groove 1234 extending along a circumferential direction of the main body 1231. The step portion 1232 has a fourth end surface facing away from the first wall 128. The fourth end surface is coplanar with a bottom surface of the first groove 1234. In a radial direction of the main body 1231, the fixing member 125 extends beyond a peripheral surface of the step portion 1232.

The electrode terminal 123 further includes a limiting portion 1233. The limiting portion 1233 protrudes from the peripheral surface of the main body 1231. The limiting portion 1233 is located on an inner side of the first wall 128. The limiting portion 1233 is configured to limit movement of the electrode terminal 123 toward an exterior of the housing 121.

The battery cell 12 further includes a first insulating member 126. The first insulating member 126 includes a body portion 1261 and a first extension portion 1262. The body portion 1261 is located between the fixing member 125 and the first wall 128. The body portion 1261 is provided with a third through hole 12611 for the electrode terminal 123 to pass through. The first extension portion 1262 is located on a periphery of the fixing member 125 and disposed around an edge of the body portion 1261. An outer surface of the first wall 128 is provided with a second groove 1282. The body portion 1261 is located in the second groove 1282. In the thickness direction of the first wall 128, an end portion of the first extension portion 1262 extends out of the second groove 1282.

The battery cell 12 further includes a sealing member 127, and at least a portion of the sealing member 127 is located between the first wall 128 and the limiting portion 1233.

Finally, it should be noted that: the above embodiments are only used to illustrate the technical solutions of the present application and are not intended to limit the present application; although the present application has been described in detail with reference to the foregoing embodiments, those of ordinary skill in the art should understand that modifications can still be made to the technical solutions recorded in the foregoing embodiments, or equivalent replacements can be made to some or all of the technical features therein; and these modifications or replacements do not cause the essence of the corresponding technical solutions to depart from the scope of the technical solutions of the embodiments of the present application, and should all be covered within the scope of the claims and specification of the present application. In particular, as long as there is no structural conflict, the various technical features mentioned in the embodiments can be combined in any manner. The present application is not limited to the specific embodiments disclosed herein but includes all technical solutions falling within the scope of the claims.

## Claims

1. A battery cell, comprising:
a housing comprising a first wall, the first wall being provided with a first through hole;
an electrode terminal comprising a main body and a step portion, wherein at least a portion of the main body passes through the first through hole, the step portion and the main body are integrally formed, the step portion protrudes from a peripheral surface of the main body, and the step portion is located on an outer side of the first wall; and
a fixing member made of a metal material, wherein the fixing member is provided with a second through hole for the main body to pass through, and in a thickness direction of the first wall, at least a portion of the fixing member is located between the first wall and the step portion and abuts against the step portion;
wherein in the thickness direction of the first wall, the main body has a first end surface facing away from an interior of the housing, the fixing member has a second end surface facing away from the first wall, and the first end surface extends beyond the second end surface.

2. The battery cell according to claim 1, wherein the yield strength of the fixing member is greater than the yield strength of the electrode terminal.

3. The battery cell according to claim 2, wherein the yield strength of the fixing member is σs1, and the yield strength of the electrode terminal is σs2, satisfying: 1.1 ≤ σs1/σs2 ≤ 10.

4. The battery cell according to claim 3, wherein 3 ≤ σs1/σs2 ≤ 5.

5. The battery cell according to any one of claims 2 and 3, wherein 205 Mpa ≤ σs1 ≤ 250 Mpa, and 40 Mpa ≤ σs2 ≤ 55 Mpa.

6. The battery cell according to any one of claims 1 to 5, wherein in the thickness direction of the first wall, a height difference between the first end surface and the second end surface is D, and a thickness of the step portion is t, satisfying: 1.1 ≤ D/t ≤ 6.

7. The battery cell according to claim 6, wherein 0.5 mm ≤ D ≤ 3 mm, and 0.5 mm ≤ t ≤ 2.5 mm.

8. The battery cell according to any one of claims 1 to 7, wherein in a radial direction of the main body, the fixing member extends beyond a peripheral surface of the step portion.

9. The battery cell according to any one of claims 1 to 8, wherein in the radial direction of the main body, a projection of the fixing member at least partially overlaps a projection of the step portion.

10. The battery cell according to claim 9, wherein at least a portion of the step portion is accommodated in the second through hole.

11. The battery cell according to claim 10, wherein a diameter of the second through hole gradually decreases along a direction approaching the first wall, and the step portion abuts against a hole wall of the second through hole.

12. The battery cell according to any one of claims 9 to 11, wherein the step portion has a third end surface facing away from the first wall, and in the thickness direction of the first wall, the second end surface extends beyond the third end surface or is flush with the third end surface.

13. The battery cell according to any one of claims 1 to 12, wherein in the radial direction of the main body, a dimension by which the step portion protrudes from the peripheral surface of the main body is W₁, and 0.1 mm ≤ W₁ ≤ 5 mm.

14. The battery cell according to any one of claims 1 to 13, wherein an edge of the first end surface is provided with a first groove extending along a circumferential direction of the main body, the step portion has a fourth end surface facing away from the first wall, and the fourth end surface is coplanar with a bottom surface of the first groove.

15. The battery cell according to claim 14, wherein in the radial direction of the main body, a distance between a side surface of the first groove and the peripheral surface of the step portion is W₂, satisfying: 0.5 mm ≤ W₂ ≤ 10 mm.

16. The battery cell according to any one of claims 14 and 15, wherein a groove depth of the first groove is T, satisfying: 0.1 mm ≤ T ≤ 5 mm.

17. The battery cell according to any one of claims 1 to 16, wherein a material of the fixing member comprises steel, and a material of the electrode terminal comprises aluminum or a copper-aluminum composite material.

18. The battery cell according to any one of claims 1 to 16, wherein the battery cell further comprises a first insulating member, and at least a portion of the first insulating member is disposed between the fixing member and the first wall.

19. The battery cell according to claim 18, wherein the first insulating member comprises a body portion and a first extension portion, the body portion is located between the fixing member and the first wall, the body portion is provided with a third through hole for the electrode terminal to pass through, and the first extension portion is located on a periphery of the fixing member and disposed around an edge of the body portion.

20. The battery cell according to claim 19, wherein an outer surface of the first wall is provided with a second groove, and the body portion is located in the second groove.

21. The battery cell according to claim 20, wherein in the thickness direction of the first wall, an end portion of the first extension portion extends out of the second groove.

22. The battery cell according to any one of claims 19 to 21, wherein the first insulating member further comprises a second extension portion, the second extension portion is disposed around the third through hole, one end of the second extension portion is connected to the body portion, and the other end of the second extension portion extends in a direction approaching the main body.

23. The battery cell according to any one of claims 1 to 22, wherein the electrode terminal further comprises a limiting portion, the limiting portion protrudes from the peripheral surface of the main body, the limiting portion is located on an inner side of the first wall, and the limiting portion is configured to limit movement of the electrode terminal toward an exterior of the housing.

24. The battery cell according to claim 23, wherein the battery cell further comprises a sealing member, and at least a portion of the sealing member is located between the first wall and the limiting portion.

25. The battery cell according to any one of claims 1 to 24, wherein the battery cell further comprises an electrode assembly and an adapter, the electrode assembly is disposed inside the housing, the adapter is connected to the electrode terminal and the electrode assembly, the electrode terminal is provided with a positioning portion, and the positioning portion is configured to position the adapter.

26. The battery cell according to claim 25, wherein the adapter is provided with a positioning fitting portion, and the positioning fitting portion cooperates with the positioning portion.

27. The battery cell according to claim 26, wherein one of the positioning portion and the positioning fitting portion comprises a positioning groove, and the other comprises a positioning protrusion.

28. The battery cell according to any one of claims 25 to 27, wherein along the thickness direction of the first wall, the electrode terminal has a first surface facing the electrode assembly, the first surface being formed with a third groove; and
the adapter and the electrode terminal are welded to form a first weld mark, and along the thickness direction of the first wall, the first weld mark does not overlap the third groove.

29. The battery cell according to claim 28, wherein the first weld mark is disposed around the third groove.

30. The battery cell according to any one of claims 1 to 29, wherein the housing comprises:
a housing body comprising a bottom wall and a side wall disposed around the bottom wall, wherein one end of the side wall is connected to the bottom wall, and the other end encloses an opening; and
an end cover configured to cover the opening;
wherein the first wall is the end cover or the bottom wall.

31. A battery, comprising the battery cell according to any one of claims 1 to 30.

32. The battery according to claim 31, wherein the battery further comprises a busbar component, the busbar component is welded to the electrode terminal to form a second weld mark, and a central axis of the first through hole passes through the second weld mark.

33. An electric device, wherein the electric device comprises the battery cell according to any one of claims 1 to 30, and the battery cell is configured to provide electrical energy; or the electric device comprises the battery according to any one of claims 31 and 32, wherein the battery is configured to provide electrical energy.
